# EUROPEAN PATENT APPLICATION

(11) **EP 4 659 979 A1**
(43) Date of publication of application: **10.12.2025**
(21) Application number: 25180377.1
(22) Date of filing: 03.06.2025
(51) Int. Cl.: B60K 17/04, F16H 57/021, F16H 57/04, B60K 7/00, H02K 9/19

(54) **RANGE EXTENDED POWERTRAIN AND RANGE EXTENDED ELECTRIC VEHICLE**

(30) Priority: 06.06.2024 CN 202410732812
(71) Applicant: Huawei Digital Power Technologies Co., Ltd., Shenzhen, Guangdong 518043 (CN)
(72) Inventor: WEI, Jingzhou, 518043 Shenzhen (CN); ZHU, Ting, 518043 Shenzhen (CN); WANG, Qi, 518043 Shenzhen (CN); SHI, Li, 518043 Shenzhen (CN); LI, Shuai, 518043 Shenzhen (CN)
(74) Representative: Isarpatent

(57) **Abstract**

This application provides a range extended powertrain and a range extended electric vehicle. Two housings of the range extended powertrain are enclosed to form an accommodation cavity, and the accommodation cavity accommodates two parallel shaft reducers arranged in parallel. One side of one of the housings includes two motor cavities that are respectively configured to fasten a stator of an electric motor and a stator of a generator. The other side of the housing includes two shaft holes, two bearing grooves, and an oil guiding rib. Each shaft hole is configured to separately communicate with the accommodation cavity and one motor cavity and is configured to fasten a bearing of one shaft of one reducer. Each bearing groove is configured to fasten a bearing of another shaft of one reducer, and a spacing between the two shaft holes is less than a spacing between one bearing groove and the other shaft hole and is greater than a spacing between the other bearing groove and one shaft hole. An extension direction of the oil guiding rib is from the shaft hole to the other shaft hole, and the extension direction of the oil guiding rib is inclined relative to a horizontal plane to guide lubricating oil collected by the oil guiding rib to the other shaft hole. This improves lubrication effect of the generator and reduces production costs of the range extended powertrain.

## Description

### TECHNICAL FIELD

This application relates to the field of range extended electric vehicle technologies, and more specifically, to a range extended powertrain and a range extended electric vehicle.

### BACKGROUND

With development of new energy technologies, range extended electric vehicles are widely used. Two reducers are further disposed in a range extended powertrain. An output shaft of each reducer is connected to an input shaft of one motor in a transmission manner. In a process in which each motor drives one reducer to rotate, a gear and a bearing of each shaft of the reducer generate a large amount of heat and are worn out due to friction. If the gear and the bearing are not cooled and lubricated in time, a transmission failure of the range extended powertrain is caused.

To achieve cooling and lubrication of the range extended powertrain, an oil churning disc is usually disposed. However, the oil churning disc not only causes large oil churning losses, but also increases costs of the range extended powertrain.

### SUMMARY

This application provides a range extended powertrain and a range extended electric vehicle. Cooling effect and lubrication effect of a gear and a bearing of each shaft of a reducer that is in the range extended powertrain and that is connected to a generator in a transmission manner can be improved, and production costs of the range extended powertrain can be further reduced. Further, performance of the range extended powertrain and performance of the range extended electric vehicle are improved, and production costs of the range extended electric vehicle are reduced.

According to a first aspect, a range extended powertrain is provided. The range extended powertrain includes two housings. One side of one of the housings includes two motor cavities arranged in parallel. The two motor cavities are respectively configured to fasten a stator of an electric motor and a stator of a generator. The other side of the housing and the other housing are enclosed to form a reducer accommodation cavity. The reducer accommodation cavity is configured to accommodate two parallel shaft reducers arranged in parallel. One of the parallel shaft reducers includes one input shaft, one intermediate shaft, and one output shaft. The other parallel shaft reducer includes another input shaft and another output shaft. The other side of the housing includes two shaft holes, two bearing grooves, and one oil guiding rib. One of the shaft holes is configured to separately communicate with the reducer accommodation cavity and one of the motor cavities and is configured to fasten one bearing of the input shaft, and the other shaft hole is configured to communicate with the reducer accommodation cavity and the other motor cavity and is configured to fasten one bearing of the another input shaft. One of the bearing grooves is configured to fasten one bearing of the intermediate shaft. The other bearing groove is configured to fasten one bearing of the another output shaft. A spacing between the bearing groove and the other shaft hole is greater than a spacing between the two shaft holes, and a spacing between the other bearing groove and the shaft hole is less than the spacing between the two shaft holes. An extension direction of the oil guiding rib is from the shaft hole to the other shaft hole. The extension direction of the oil guiding rib is inclined relative to a horizontal plane to guide lubricating oil collected by the oil guiding rib to the other shaft hole.

According to the range extended powertrain provided in this embodiment of this application, because the spacing between the bearing groove and the other shaft hole is greater than the spacing between the two shaft holes, and the spacing between the other bearing groove and the shaft hole is less than the spacing between the two shaft holes, space between the two shaft holes may be used, and the oil guiding rib can be disposed in the space between the two shaft holes. The oil guiding rib can collect the lubricating oil thrown out from a gear of an input shaft of one parallel shaft reducer that is connected to the electric motor in a transmission manner. In addition, the oil guiding rib is disposed to be inclined relative to the horizontal plane. In this way, under effect of gravity, the oil guiding rib can guide the lubricating oil collected by the oil guiding rib to the other shaft hole, to implement passive cooling and passive lubrication for a gear and a bearing of an input shaft of the other parallel shaft reducer that is connected to the generator in a transmission manner. In this way, cooling effect and lubrication effect of a gear and a bearing of each shaft of the other parallel shaft reducer that is connected to the generator in a transmission manner can be improved, and production costs of the range extended powertrain can be further reduced. Further, performance of the range extended powertrain is improved.

In an implementation, the oil guiding rib is spaced apart from the shaft hole and the other shaft hole, and in the extension direction of the oil guiding rib, a spacing between one end of the oil guiding rib and the shaft hole is greater than a spacing between the other end of the oil guiding rib and the other shaft hole.

Correspondingly, the lubricating oil collected by the oil guiding rib can be better guided to the other shaft hole. This further improves passive cooling and passive lubrication for the gear and the bearing of each shaft of the other parallel shaft reducer that is connected to the generator in a transmission manner.

In an implementation, the other side of the housing includes a protrusion. A side surface that is of the protrusion and that faces the other shaft hole includes one oil outlet. An outlet of the oil outlet faces the other shaft hole. The oil guiding rib is configured to collect the lubricating oil output from the oil outlet.

Correspondingly, the oil guiding rib can collect, in a centralized manner, the lubricating oil output from the oil outlet of the protrusion, so that the oil guiding rib collects more lubricating oil.

In an implementation, a length of the protrusion is less than a length of the oil guiding rib. A spacing between the protrusion and the shaft hole is greater than a spacing between the other end of the oil guiding rib and the other shaft hole. A spacing between the oil outlet and the shaft hole is greater than the spacing between the end of the oil guiding rib and the shaft hole.

Correspondingly, production costs of the protrusion can be reduced, and an amount of the lubricating oil that is collected by the oil guiding rib and is output from the oil outlet of the protrusion can be further increased.

In an implementation, the oil guiding rib includes one through hole, and the through hole is used to flow out the lubricating oil collected by the oil guiding rib. The through hole runs through the oil guiding rib in a thickness direction of the oil guiding rib.

Correspondingly, the oil guiding rib can guide the lubricating oil collected by the oil guiding rib to the other shaft hole, and the oil guiding rib can further guide a part of the lubricating oil collected by the oil guiding rib to another component through the through hole, to improve cooling effect and lubrication effect of the another component.

In an implementation, a spacing between the through hole and the end of the oil guiding rib is greater than or equal to a spacing between the through hole and the other end of the oil guiding rib.

That a spacing between the through hole and the end of the oil guiding rib is greater than or equal to a spacing between the through hole and the other end of the oil guiding rib may be understood as: Compared with the shaft hole, the through hole of the oil guiding rib is disposed on a side closer to the other shaft hole. In this way, the oil guiding rib may guide, through the through hole, a part of the lubricating oil collected by the oil guiding rib to the other bearing groove located between the two shaft holes, to implement passive cooling and passive lubrication for a gear and a bearing of the output shaft of the other parallel shaft reducer that is connected to the generator in a transmission manner.

According to the range extended powertrain provided in this embodiment of this application, only the oil guiding rib needs to be disposed on the other side of the housing, and the through hole needs to be disposed on one side that is of the oil guiding rib and that is close to the other shaft hole, so that passive cooling and passive lubrication for the gear and the bearing of each shaft of the other parallel shaft reducer that is connected to the generator in a transmission manner can be implemented. In this way, the cooling effect and the lubrication effect of the gear and the bearing of the other parallel shaft reducer that is connected to the generator in a transmission manner can be further improved, and the production costs of the range extended powertrain can be further reduced.

In an implementation, the through hole communicates with one end surface of the oil guiding rib. The end surface of the oil guiding rib faces the other housing. In a width direction of the oil guiding rib, a spacing between the end surface of the oil guiding rib and the other housing is less than or equal to a spacing between each bearing groove or each shaft hole and the other housing. In this way, the oil guiding rib can guide, as fully as possible, the lubricating oil collected by the oil guiding rib to the other shaft hole or the other bearing groove.

In an implementation, the other side of the housing further includes one oil collecting rib. The oil collecting rib is spaced apart from the oil guiding rib. A spacing between one end of the oil collecting rib and the shaft hole is greater than a spacing between the other end of the oil collecting rib and the other shaft hole. The spacing between the other end of the oil collecting rib and the other shaft hole is less than or equal to the spacing between the other end of the oil guiding rib and the other shaft hole. The oil collecting rib is configured to collect the lubricating oil flowing out from the other end of the oil guiding rib.

Correspondingly, only the oil collecting rib needs to be disposed, at a spacing, near the oil guiding rib on the other side of the housing, so that the lubricating oil collected by the oil guiding rib can be guided to the oil collecting rib, to further reduce the production costs of the range extended powertrain.

In addition, the other end of the oil collecting rib is closer to the other shaft hole than the other end of the oil guiding rib. In this way, the oil collecting rib can collect the lubricating oil flowing out from the other end of the oil guiding rib, and a large amount of lubricating oil is collected by the oil collecting rib from the other end of the oil guiding rib.

In an implementation, the end of the oil collecting rib faces the other bearing groove. A spacing between the end of the oil collecting rib and the oil guiding rib is greater than a spacing between the other end of the oil collecting rib and the oil guiding rib. The oil collecting rib is further configured to guide the lubricating oil collected by the oil collecting rib to the other bearing groove.

Correspondingly, under effect of gravity, the oil collecting rib can smoothly guide the lubricating oil collected by the oil collecting rib to the other bearing groove, to implement passive cooling and passive lubrication for the gear and the bearing of the output shaft of the other parallel shaft reducer that is connected to the generator in a transmission manner.

In an implementation, the other side of the housing further includes another oil collecting rib. The another oil collecting rib and the oil guiding rib are adjacently arranged. A spacing between one end of the another oil collecting rib and the shaft hole is less than or equal to a spacing between the through hole of the oil guiding rib and the shaft hole. A spacing between the other end of the another oil collecting rib and the other shaft hole is less than or equal to a spacing between the through hole of the oil guiding rib and the other shaft hole. The another oil collecting rib is configured to collect the lubricating oil flowing out from the through hole of the oil guiding rib.

Correspondingly, only the another oil collecting rib needs to be disposed near the oil guiding rib on the other side of the housing, so that the lubricating oil flowing out from the through hole of the oil guiding rib can be guided to the another oil collecting rib, to further reduce the production costs of the range extended powertrain.

In addition, the another oil collecting rib is located below the through hole of the oil guiding rib. In this way, the another oil collecting rib can collect the lubricating oil flowing out from the through hole of the oil guiding rib, and a large amount of lubricating oil is collected by the another oil collecting rib from the through hole of the oil guiding rib.

In an implementation, the other end of the another oil collecting rib faces the other bearing groove. A spacing between the end of the another oil collecting rib and the oil guiding rib is less than a spacing between the other end of the another oil collecting rib and the oil guiding rib. The another oil collecting rib is further configured to guide the lubricating oil collected by the another oil collecting rib to the other bearing groove.

Correspondingly, under effect of gravity, the another oil collecting rib can smoothly guide the lubricating oil collected by the another oil collecting rib to the other bearing groove, to implement passive cooling and passive lubrication for the gear and the bearing of the output shaft of the other parallel shaft reducer that is connected to the generator in a transmission manner.

In an implementation, the other side of the housing further includes two recesses. An extension direction of each recess is inclined relative to the horizontal plane. One recess is configured to communicate with the other shaft hole and is configured to guide the collected lubricating oil into the other shaft hole. The other recess is configured to communicate with the other bearing groove and is configured to guide the collected lubricating oil into the other bearing.

Correspondingly, only the recess communicating with the other shaft hole or the other bearing groove needs to be disposed on the other side of the housing, and the recess is inclined relative to the horizontal plane. In this way, under effect of gravity, the lubricating oil may flow into the other shaft hole or the other bearing groove along the recess, to implement passive cooling and passive lubrication for the gear and the bearing of each shaft of the other parallel shaft reducer that is connected to the generator in a transmission manner. Therefore, the production costs of the range extended powertrain can be further reduced.

In an implementation, one side of the other housing faces the other side of the housing. The side of the other housing includes another oil guiding rib. In the width direction of the oil guiding rib, the another oil guiding rib and the oil guiding rib are combined to form an oil guiding groove.

Another oil guiding rib that matches the oil guiding rib of the housing is disposed on one side of the other housing. In this way, the another oil guiding rib of the other housing can collect the lubricating oil of the oil guiding rib of the housing. In this way, the lubricating oil collected by the another oil guiding rib of the other housing can lubricate a component on one side of the other housing. Therefore, cooling effect and lubrication effect of a gear and a bearing of each shaft of each reducer of the range extended powertrain are improved, and the production costs of the range extended powertrain are reduced.

In an implementation, an extension direction of the another oil guiding rib is the same as the extension direction of the oil guiding rib. An acute angle range between an extension direction of the oil guiding groove and the horizontal plane is [15 degrees, 30 degrees]. In this way, efficiency of collecting the lubricating oil by the oil guiding groove and efficiency of guiding the collected lubricating oil by the oil guiding groove to the other shaft hole can be improved.

In an implementation, one end of the another oil guiding rib and the end of the oil guiding rib separately bend toward one side of the oil outlet. In this way, the lubricating oil collected by the oil guiding rib can be prevented from flowing back along the end of the oil guiding rib, and the lubricating oil collected by the another oil guiding rib can be prevented from flowing back along the end of the another oil guiding rib.

In an implementation, a length of the another oil guiding rib is equal to the length of the oil guiding rib. In this way, efficiency of collecting the lubricating oil by the oil guiding groove formed by combining the two oil guiding ribs and efficiency of guiding the collected lubricating oil by the oil guiding groove to the other shaft hole can be improved.

According to a second aspect, a range extended electric vehicle is provided. The range extended electric vehicle includes wheels, a battery pack, and the range extended powertrain according to any one of the first aspect and the possible implementations of the first aspect. The range extended powertrain is configured to receive power supplied by the battery pack and drive the wheels.

Because cooling effect and lubrication effect of the range extended powertrain provided in the first aspect are good, and production costs are low, production costs of the range extended electric vehicle provided in the second aspect can also be reduced.

### BRIEF DESCRIPTION OF DRAWINGS

FIG. 1 is a diagram of a structure of an example of a range extended electric vehicle according to an embodiment of this application;
FIG. 2 is a diagram of a structure of an example of a range extended powertrain according to an embodiment of this application;
FIG. 3 and FIG. 4 are respectively diagrams of structures of one housing of the range extended powertrain shown in FIG. 2;
FIG. 5 is an enlarged diagram of a part A of one housing shown in FIG. 4;
FIG. 6 is a diagram of a structure of the other housing of the range extended powertrain shown in FIG. 2; and
FIG. 7 is an enlarged diagram of a part B of the other housing shown in FIG. 6.

### DESCRIPTION OF EMBODIMENTS

The following describes technical solutions of this application with reference to accompanying drawings.

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists.

An orientation or a location relationship indicated by the term "above", "below", "left", "right", "inner", "outer", or the like in embodiments of this application is an orientation or a location relationship based on the accompanying drawings, and is merely intended for ease of describing this application and simplifying description, but does not indicate or imply that a specified apparatus or element needs to have a specific orientation or needs to be constructed and operated in a specific orientation. Therefore, such terms cannot be understood as a limitation on this application.

Reference to "some embodiments" or the like described in this specification indicates that one or more embodiments of this application include a specific feature, structure, or characteristic described with reference to embodiments. Therefore, statements such as "in some embodiments" that appear at different places in this specification do not necessarily refer to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

In this application, "equal" is not strictly equal, but within an allowable error range. "Perpendicular" is not strictly perpendicular, but within an allowed error range. "Parallel" is not strictly parallel, but within an allowable error range.

In embodiments of this application, a same reference numeral indicates a same component or a same part. In embodiments of this application, for a plurality of same parts, only one part marked with a reference numeral may be used as an example in the figure. For another same part or component, reference numerals are also applicable. In addition, dimensions and sizes of the parts shown in the accompanying drawings are merely examples.

An embodiment of this application provides a range extended powertrain. The range extended powertrain includes two housings. One side of one housing includes two motor cavities arranged in parallel. The two motor cavities are respectively configured to fasten a stator of an electric motor and a stator of a generator. The other side of the housing and the other housing are enclosed to form a reducer accommodation cavity. The reducer accommodation cavity is configured to accommodate two parallel shaft reducers arranged in parallel. One of the parallel shaft reducers includes one input shaft, one intermediate shaft, and one output shaft. The other parallel shaft reducer includes another input shaft and another output shaft. The other side of the housing includes two shaft holes, two bearing grooves, and one oil guiding rib. One of the shaft holes is configured to separately communicate with the reducer accommodation cavity and one of the motor cavities and is configured to fasten one bearing of the input shaft, and the other shaft hole is configured to communicate with the reducer accommodation cavity and the other motor cavity and is configured to fasten one bearing of the another input shaft. One of the bearing grooves is configured to fasten one bearing of the intermediate shaft. The other bearing groove is configured to fasten one bearing of the another output shaft. A spacing between the bearing groove and the other shaft hole is greater than a spacing between the two shaft holes, and a spacing between the other bearing groove and the shaft hole is less than the spacing between the two shaft holes. An extension direction of the oil guiding rib is from the shaft hole to the other shaft hole. The extension direction of the oil guiding rib is inclined relative to a horizontal plane to guide lubricating oil collected by the oil guiding rib to the other shaft hole.

According to the range extended powertrain provided in this embodiment of this application, because the spacing between the bearing groove and the other shaft hole is greater than the spacing between the two shaft holes, and the spacing between the other bearing groove and the shaft hole is less than the spacing between the two shaft holes, the oil guiding rib can be disposed in space between the two shaft holes. The oil guiding rib can collect the lubricating oil thrown out from a gear of an input shaft of one parallel shaft reducer that is connected to the electric motor in a transmission manner. In addition, the oil guiding rib is disposed to be inclined relative to the horizontal plane. In this way, under effect of gravity, the oil guiding rib can guide the lubricating oil collected by the oil guiding rib to the other shaft hole, to implement passive cooling and passive lubrication for a gear and a bearing of an input shaft of the other parallel shaft reducer that is connected to the generator in a transmission manner. In this way, cooling effect and lubrication effect of a gear and a bearing of each shaft of the other parallel shaft reducer that is connected to the generator in a transmission manner can be improved, and production costs of the range extended powertrain can be further reduced. Further, performance of the range extended powertrain is improved.

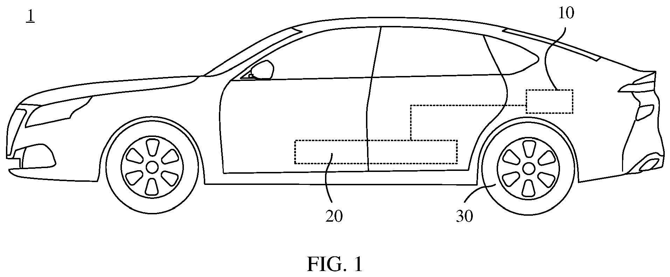

An embodiment of this application further provides a range extended electric vehicle. The following first describes in detail the range extended electric vehicle provided in this embodiment of this application with reference to FIG. 1.

FIG. 1 is a diagram of a structure of a range extended electric vehicle according to an embodiment of this application. As shown in FIG. 1, the range extended electric vehicle 1 includes one or more powertrains 10, a battery pack 20, and wheels 30. The powertrain 10 is configured to: receive power supplied by the battery pack 20, convert electric energy into mechanical energy, and drive the wheels 30 to rotate.

The range extended electric vehicle provided in embodiments of this application is also referred to as a range extended electric vehicle, or is a REEV for short.

The range extended powertrain 10 includes two motors: one electric motor and one generator. The electric vehicle 1 may switch between a pure electric working mode and a range extended working mode. When the electric vehicle 1 is in the pure electric working mode, the battery pack 20 supplies power to the electric motor, to drive the electric vehicle 1. When the battery 20 is low or is exhausted, an engine may be started, so that the electric vehicle 1 switches to the range extended working mode. When the electric vehicle 1 is in the range extended working mode, the engine drives the generator to generate electricity, and generated electric energy may be used to charge the battery 20 or may be provided to the electric motor.

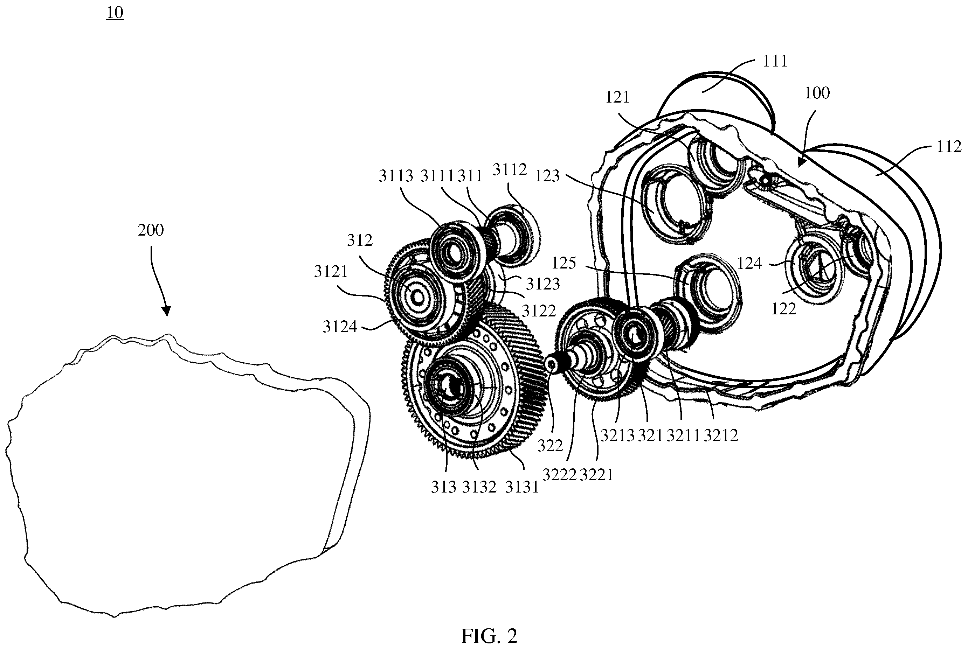

The following describes in detail a structure of a range extended powertrain provided in embodiments of this application with reference to FIG. 2 to FIG. 7.

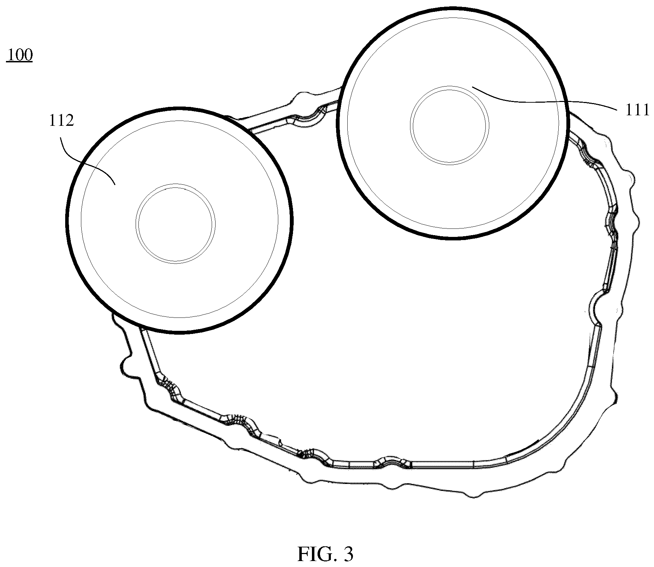

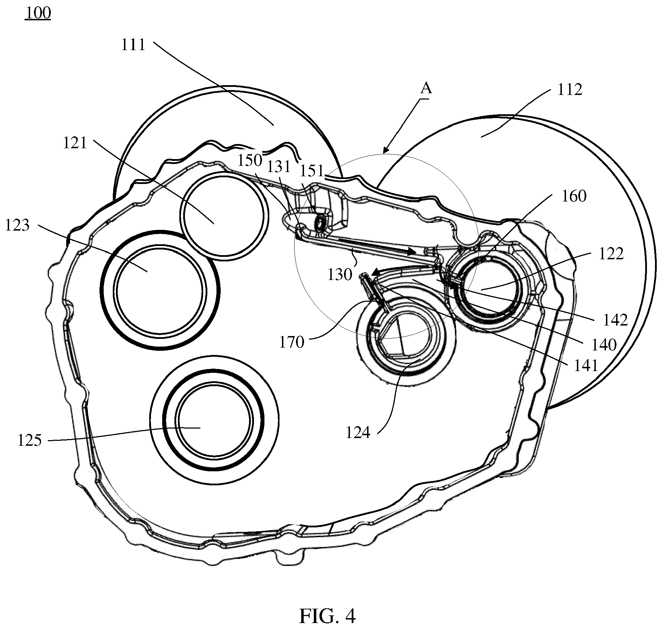

As shown in FIG. 2, the range extended powertrain 10 includes one housing 100. As shown in FIG. 3 and FIG. 4, one side of the housing 100 includes one motor cavity 111 and the other motor cavity 112 that are arranged in parallel. The motor cavity 111 is configured to fasten a stator of an electric motor of the range extended powertrain 10, and the other motor cavity 112 is configured to fasten a stator of a generator of the range extended powertrain 10.

As shown in FIG. 2, the range extended powertrain 10 further includes the other housing 200. The other side of the housing 100 and one side of the other housing 200 are enclosed to form a reducer accommodation cavity. The reducer accommodation cavity is configured to accommodate two parallel shaft reducers arranged in parallel.

It should be noted that parallel arrangement in this embodiment of this application may be understood as parallel arrangement in a horizontal direction. The horizontal direction is perpendicular to a gravity direction. The parallel shaft reducer may be understood as that shafts of the reducer are arranged in parallel.

As shown in FIG. 2, one parallel shaft reducer includes one input shaft 311, one intermediate shaft 312, and one output shaft 313. The input shaft 311 passes through one gear 3111 and two bearings 3112 and 3113, the intermediate shaft 312 passes through two gears 3121 and 3122 and two bearings 3123 and 3124, and the output shaft 313 passes through one gear 3131 and two bearings (FIG. 2 shows only the other bearing 3132 of the two bearings). The gear 3111 of the input shaft 311 and the gear 3121 of the intermediate shaft 312 are engaged with each other, so that the input shaft 311 of the parallel shaft reducer drives rotation of the intermediate shaft 312. The other gear 3122 of the intermediate shaft 312 and the gear 3131 of the output shaft 313 are engaged with each other, so that the intermediate shaft 312 of the parallel shaft reducer drives rotation of the output shaft 313.

The other parallel shaft reducer includes another input shaft 321 and another output shaft 322. The another input shaft 321 passes through one gear 3211 and two bearings 3212 and 3213, and the another output shaft 322 passes through one gear 3221 and two bearings (FIG. 2 shows only the other bearing 3222 of the two bearings). The gear 3211 of the another input shaft 321 and the gear 3221 of the another output shaft 322 are engaged with each other, so that the another input shaft 321 of the other parallel shaft reducer drives rotation of the another output shaft 322. Therefore, the other parallel shaft reducer decelerates the generator.

The following describes in detail a structure of the housing 100 of the range extended powertrain 10 with reference to FIG. 3 to FIG. 5.

As shown in FIG. 4, the other side of the housing 100 includes one shaft hole 121. The shaft hole 121 of the housing 100 is configured to separately communicate with the reducer accommodation cavity and the motor cavity 111, and the shaft hole 121 of the housing 100 is further configured to fasten the bearing 3112 of the input shaft 311. In addition, the shaft hole 121 of the housing 100 is further configured to fasten one bearing of a motor shaft of the electric motor, and the motor shaft of the electric motor is connected to the input shaft 311 in a transmission manner. In this way, the motor shaft of the electric motor may transfer power to the input shaft 311 of the parallel shaft reducer. Therefore, output torque and a rotation speed of the electric motor are controlled.

As shown in FIG. 4, the other side of the housing 100 further includes another shaft hole 122. The another shaft hole 122 of the housing 100 is configured to communicate with the reducer accommodation cavity and the other motor cavity 112. The another shaft hole 122 of the housing 100 is configured to fasten the bearing 3212 of the another input shaft 321. In addition, the another shaft hole 122 of the housing 100 is further configured to fasten one bearing of a motor shaft of the generator, and the motor shaft of the generator is connected to the another input shaft 321 in a transmission manner. In this way, the motor shaft of the generator may transfer power to the another input shaft 321 of the other parallel shaft reducer. Therefore, output torque and a rotation speed of the generator are controlled.

As shown in FIG. 4, the other side of the housing 100 further includes one bearing groove 123 and another bearing groove 124. The bearing groove 123 of the housing 100 is configured to fasten the bearing 3123 of the intermediate shaft 312, and the another bearing groove 124 of the housing 100 is configured to fasten one bearing of the another output shaft 322. A spacing between the bearing groove 123 of the housing 100 and the another shaft hole 122 of the housing 100 is greater than a spacing between the shaft hole 121 of the housing 100 and the another shaft hole 122 of the housing 100, and a spacing between the another bearing groove 124 of the housing 100 and the shaft hole 121 of the housing 100 is less than the spacing between the shaft hole 121 of the housing 100 and the another shaft hole 122 of the housing 100. In other words, the bearing groove 123 of the housing 100 is arranged on one side that is of the shaft hole 121 of the housing 100 and that is away from the another shaft hole 122 of the housing 100, and the another bearing groove 124 of the housing 100 is arranged on one side that is of the another shaft hole 122 of the housing 100 and that is close to the shaft hole 121 of the housing 100.

In some embodiments, to make a structure of the range extended powertrain compact, an outer groove wall of the bearing groove 123 of the housing 100 may be tangent to a hole wall of the shaft hole 121 of the housing 100. Similarly, the another bearing groove 124 of the housing 100 may also be tangent to a hole wall of the another shaft hole 122 of the housing 100.

As shown in FIG. 4, the other side of the housing 100 further includes still another shaft hole 125, the still another shaft hole 125 of the housing 100 is configured to communicate with the reducer accommodation cavity, and the still another shaft hole 125 of the housing 100 is configured to fasten one bearing of the output shaft 313.

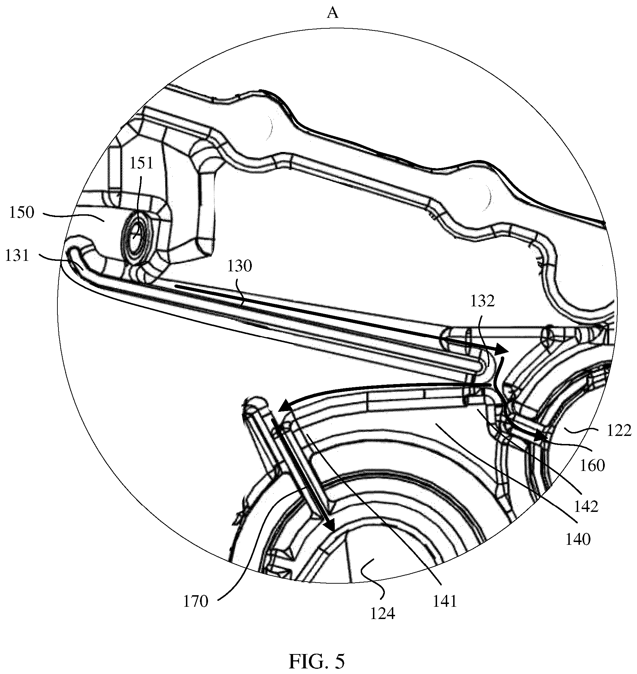

As shown in FIG. 4 and FIG. 5, the other side of the housing 100 further includes one oil guiding rib 130. An extension direction of the oil guiding rib 130 is from the shaft hole 121 of the housing 100 to the another shaft hole 122 of the housing 100. The extension direction of the oil guiding rib 130 is inclined relative to a horizontal plane to guide lubricating oil collected by the oil guiding rib 130 to the another shaft hole 122 of the housing 100.

It should be noted that the extension direction of the oil guiding rib 130 may be understood as a length direction of the oil guiding rib 130.

In some embodiments, as shown in FIG. 4, in a gravity direction, a location of the shaft hole 121 of the housing 100 is higher than a location of the another shaft hole 122 of the housing 100. In other words, in the gravity direction, the shaft hole 121 of the housing 100 is located at the upper left of the another shaft hole 122 of the housing 100. In addition, in the gravity direction, one end 131 of the oil guiding rib 130 is higher than the other end 132 of the oil guiding rib 130. In this way, the oil guiding rib 130 can guide the collected lubricating oil to the another shaft hole 122 of the housing 100.

According to the range extended powertrain 10 provided in this embodiment of this application, the spacing between the bearing groove 123 of the housing 100 and the another shaft hole 122 of the housing 100 is greater than the spacing between the shaft hole 121 of the housing 100 and the another shaft hole 122 of the housing 100, and the spacing between the another bearing groove 124 of the housing 100 and the shaft hole 121 of the housing 100 is less than the spacing between the shaft hole 121 of the housing 100 and the another shaft hole 122 of the housing 100. In this way, space between the shaft hole 121 of the housing 100 and the another shaft hole 122 of the housing 100 may be used, and the oil guiding rib 130 is disposed in the space between the shaft hole 121 of the housing 100 and the another shaft hole 122 of the housing 100. The oil guiding rib 130 can collect lubricating oil thrown out from a gear of the input shaft 311 of the parallel shaft reducer.

In addition, the oil guiding rib 130 is disposed to be inclined relative to a horizontal plane. In this way, under effect of gravity, the oil guiding rib 130 can guide the lubricating oil collected by the oil guiding rib 130 to the another shaft hole 122 of the housing 100, to implement passive cooling and passive lubrication for a gear and a bearing of the another input shaft 321 of the other parallel shaft reducer that is connected to the generator in a transmission manner. Therefore, cooling effect and lubrication effect of a gear and a bearing of each shaft of the other parallel shaft reducer that is connected to the generator in a transmission manner can be improved, and production costs of the range extended powertrain 10 can be further reduced. Further, performance of the range extended powertrain 10 is improved.

In some embodiments, as shown in FIG. 4, the oil guiding rib 130 is arranged between the shaft hole 121 of the housing 100 and the another shaft hole 122 of the housing 100 at a spacing. In the extension direction of the oil guiding rib 130, a spacing between the end 131 of the oil guiding rib 130 and the shaft hole 121 of the housing 100 is greater than a spacing between the other end 132 of the oil guiding rib 130 and the another shaft hole 122 of the housing 100. In this way, the oil guiding rib 130 can better guide the collected lubricating oil to the another shaft hole 122 of the housing 100. This further improves passive cooling and passive lubrication for the gear and the bearing of each shaft of the other parallel shaft reducer.

In some embodiments, as shown in FIG. 4, the other side of the housing 100 includes a protrusion 150. A side surface that is of the protrusion 150 and that faces the another shaft hole 122 of the housing 100 includes an oil outlet 151. An outlet of the oil outlet 151 faces the another shaft hole 122 of the housing 100. The oil guiding rib 130 is configured to collect the lubricating oil output by the oil outlet 151. In this way, the oil guiding rib 130 can collect, in a centralized manner, the lubricating oil output from the oil outlet 151, so that the oil guiding rib 130 collects more lubricating oil.

In some embodiments, a length of the protrusion 150 is less than a length of the oil guiding rib 130. A spacing between the protrusion 150 and the shaft hole 121 of the housing 100 is greater than the spacing between the other end 132 of the oil guiding rib 130 and the another shaft hole 122 of the housing 100, and a spacing between the oil outlet 151 and the shaft hole 121 of the housing 100 is greater than the spacing between the end 131 of the oil guiding rib 130 and the shaft hole 121 of the housing 100. In this way, production costs of the protrusion 150 can be reduced, and an amount of lubricating oil that is collected by the oil guiding rib 130 and is output by the oil outlet 151 can be further increased.

In some embodiments, the protrusion 150 includes a through hole, and the through hole of the protrusion 150 is used to communicate with the oil outlet 151 and an oil outlet of an oil pump. In this way, it can be ensured that the amount of lubricating oil output from the oil outlet 151 of the protrusion 150 is sufficient, to further ensure that the amount of lubricating oil required for the gear and the bearing of each shaft of the other parallel shaft reducer is sufficient.

In some embodiments, a cross-sectional area of the oil outlet 151 is less than a cross-sectional area of the through hole of the protrusion 150. In this way, the lubricating oil flows into the oil outlet 151 from the through hole of the protrusion 150, and a flow rate of the lubricating oil is large. Further, efficiency of collecting the lubricating oil by the oil guiding rib 130 can be improved.

In some embodiments, the end 131 of the oil guiding rib 130 bends toward one side of the oil outlet 151. In this way, the lubricating oil collected by the oil guiding rib 130 can be prevented from flowing back along the end 131 of the oil guiding rib 130.

In some embodiments, as shown in FIG. 4 and FIG. 5, the other side of the housing 100 further includes one oil collecting rib 140. The oil collecting rib 140 of the housing 100 is spaced apart from the oil guiding rib 130. A spacing between one end 141 of the oil collecting rib 140 of the housing 100 and the shaft hole 121 of the housing 100 is greater than a spacing between the other end 142 of the oil collecting rib 140 of the housing 100 and the another shaft hole 122 of the housing 100. The spacing between the other end 142 of the oil collecting rib 140 of the housing 100 and the another shaft hole 122 of the housing 100 is less than or equal to the spacing between the other end 132 of the oil guiding rib 130 and the another shaft hole 122 of the housing 100. The oil collecting rib 140 of the housing 100 is configured to collect the lubricating oil flowing out from the other end 132 of the oil guiding rib 130.

In this way, only the oil collecting rib 140 needs to be disposed, at a spacing, near the oil guiding rib 130 on the other side of the housing 100, so that the lubricating oil collected by the oil guiding rib 130 can be guided to the oil collecting rib 140, to further reduce the production costs of the range extended powertrain 10.

In addition, the other end 142 of the oil collecting rib 140 of the housing 100 is closer to the another shaft hole 122 of the housing 100 than the other end 132 of the oil guiding rib 130. In this way, the oil collecting rib 140 of the housing 100 can collect the lubricating oil flowing out from the other end 132 of the oil guiding rib 130, and a large amount of lubricating oil is collected by the oil collecting rib 140 of the housing 100 from the other end 132 of the oil guiding rib 130.

In some embodiments, as shown in FIG. 4 and FIG. 5, the end 141 of the oil collecting rib 140 of the housing 100 faces the another bearing groove 124 of the housing 100. A spacing between the end 141 of the oil collecting rib 140 of the housing 100 and the oil guiding rib 130 is greater than a spacing between the other end 142 of the oil collecting rib 140 of the housing 100 and the oil guiding rib 130. The oil collecting rib 140 of the housing 100 is further configured to guide the lubricating oil collected by the oil collecting rib 140 to the another bearing groove. In this way, under effect of gravity, the oil collecting rib 140 of the housing 100 can smoothly guide the lubricating oil collected by the oil collecting rib 140 to the another bearing groove 124 of the housing 100, to implement passive cooling and passive lubrication for a gear and a bearing of the another output shaft 322 of the other parallel shaft reducer that is connected to the generator in a transmission manner.

In some embodiments, the oil guiding rib 130 includes a through hole, and the through hole is used to flow out the lubricating oil collected by the oil guiding rib 130. The through hole of the oil guiding rib 130 runs through the oil guiding rib 130 in a thickness direction of the oil guiding rib 130. In this way, the oil guiding rib 130 can guide the lubricating oil collected by the oil guiding rib 130 to the another shaft hole 122 of the housing 100, and the oil guiding rib 130 can further guide a part of the lubricating oil collected by the oil guiding rib 130 to another component through the through hole of the oil guiding rib 130, to improve cooling effect and lubrication effect of the another component.

It should be noted that the thickness direction of the oil guiding rib 130 may be understood as a height direction of the oil guiding rib 130.

In some embodiments, a spacing between the through hole of the oil guiding rib 130 and the end 131 of the oil guiding rib 130 is greater than or equal to a spacing between the through hole of the oil guiding rib 130 and the other end 132 of the oil guiding rib 130. Compared with the shaft hole 121 of the housing 100, the through hole of the oil guiding rib 130 is disposed on one side closer to the another shaft hole 122 of the housing 100. In this way, the oil guiding rib 130 may guide, through the through hole of the oil guiding rib 130, a part of the lubricating oil collected by the oil guiding rib 130 to the another bearing groove 124 located between the shaft hole 121 and the another shaft hole 122 of the housing 100, to implement passive cooling and passive lubrication for the gear and the bearing of the another output shaft 322 of the other parallel shaft reducer that is connected to the generator in a transmission manner. In this way, the cooling effect and the lubrication effect of the gear and the bearing of each shaft of the other parallel shaft reducer that is connected to the generator in a transmission manner can be further improved, and the production costs of the range extended powertrain 10 can be further reduced.

In some embodiments, the through hole of the oil guiding rib 130 communicates with one end surface of the oil guiding rib 130. The end surface of the oil guiding rib 130 faces the other housing 200. In a width direction of the oil guiding rib 130, a spacing between the end surface of the oil guiding rib 130 and the other housing 200 is less than or equal to a spacing between each bearing groove or each shaft hole of the housing 100 and the other housing 200. In this way, the oil guiding rib 130 can guide, as fully as possible, the lubricating oil collected by the oil guiding rib 130 to the another shaft hole 122 or the another bearing groove 124 of the housing 100.

It should be noted that the width direction of the oil guiding rib 130 may be understood as a width direction of the housing 100.

In some embodiments, the other side of the housing 100 further includes another oil collecting rib, and the another oil collecting rib of the housing 100 and the oil guiding rib 130 are adjacently arranged. A spacing between one end of the another oil collecting rib of the housing 100 and the shaft hole 121 of the housing 100 is less than or equal to a spacing between the through hole of the oil guiding rib 130 and the shaft hole 121 of the housing 100. A spacing between the other end of the another oil collecting rib of the housing 100 and the another shaft hole 122 of the housing 100 is less than or equal to a spacing between the through hole of the oil guiding rib 130 and the another shaft hole 122 of the housing 100. The another oil collecting rib of the housing 100 is configured to collect the lubricating oil flowing out from the through hole of the oil guiding rib 130.

In this way, only the another oil collecting rib needs to be disposed near the oil guiding rib 130 on the other side of the housing 100, so that the lubricating oil flowing out from the through hole of the oil guiding rib 130 can be guided to the another oil collecting rib of the housing 100, to further reduce the production costs of the range extended powertrain 10.

In addition, the another oil collecting rib of the housing 100 is located below the through hole of the oil guiding rib 130. In this way, the another oil collecting rib of the housing 100 can collect the lubricating oil flowing out from the through hole of the oil guiding rib 130, and a large amount of lubricating oil is collected by the another oil collecting rib of the housing 100 from the through hole of the oil guiding rib 130.

In some embodiments, the other end of the another oil collecting rib of the housing 100 faces the another bearing groove 124 of the housing 100. A spacing between the end of the another oil collecting rib of the housing 100 and the oil guiding rib 130 is less than a spacing between the other end of the another oil collecting rib of the housing 100 and the oil guiding rib 130. The another oil collecting rib of the housing 100 is further configured to guide the lubricating oil collected by the another oil collecting rib to the another bearing groove 124 of the housing 100. In this way, under effect of gravity, the another oil collecting rib of the housing 100 can smoothly guide the lubricating oil collected by the another oil collecting rib to the another bearing groove 124 of the housing 100, to implement passive cooling and passive lubrication for the gear and the bearing of the another output shaft 322 of the other parallel shaft reducer that is connected to the generator in a transmission manner.

In some embodiments, there is no spacing between the end of the another oil collecting rib of the housing 100 and the oil guiding rib 130. In this way, the amount of lubricating oil collected by the another oil collecting rib of the housing 100 from the through hole of the oil guiding rib 130 can be increased.

In some embodiments, a middle part of the another oil collecting rib of the housing 100 bends toward one side that is away from the another shaft hole 122 of the housing 100. In this way, impact of the lubricating oil flowing out from the through hole of the oil guiding rib 130 on the another oil collecting rib of the housing 100 can be reduced.

In some embodiments, as shown in FIG. 4 and FIG. 5, the other side of the housing 100 further includes one recess 160. The recess 160 of the housing 100 is configured to communicate with the another shaft hole 122 of the housing 100. The recess 160 of the housing 100 is configured to guide the collected lubricating oil into the another shaft hole 122 of the housing 100. In this way, under effect of gravity, the lubricating oil may flow into the another shaft hole 122 of the housing 100 along the recess 160 of the housing 100, to implement passive cooling and passive lubrication for the gear and the bearing of the another input shaft 321 of the other parallel shaft reducer that is connected to the generator in a transmission manner. Therefore, the production costs of the range extended powertrain 10 can be further reduced.

In some embodiments, as shown in FIG. 4 and FIG. 5, the recess 160 of the housing 100 is arranged on one side that is of the other end 142 of the oil collecting rib 140 of the housing 100 and that is away from the end 141 of the oil collecting rib 140. The recess 160 of the housing 100 and the other end 142 of the oil collecting rib 140 of the housing 100 are adjacently arranged, and there is a spacing between the recess 160 of the housing 100 and the other end 142 of the oil collecting rib 140 of the housing 100. In this way, a part of the lubricating oil flowing out from the other end 132 of the oil guiding rib 130 may flow into the recess 160 of the housing 100 along the spacing between the recess 160 of the housing 100 and the other end 142 of the oil collecting rib 140, and then flow into the another shaft hole 122 of the housing 100. The other part of the lubricating oil flowing out from the other end 132 of the oil guiding rib 130 may flow into the oil collecting rib 140 along a spacing between the oil guiding rib 130 and the oil collecting rib 140.

In some embodiments, as shown in FIG. 4 and FIG. 5, the recess 160 of the housing 100 is arranged on one side that is of the another bearing groove 124 of the housing 100 and that faces the oil guiding rib 130 of the housing 100, and the recess 160 of the housing 100 is spaced apart from the other end 132 of the oil guiding rib 130 of the housing 100. In this way, the lubricating oil flowing out from the other end 132 of the oil guiding rib 130 may flow into the recess 160 of the housing 100, and then flow into the another shaft hole 122 of the housing 100.

In some embodiments, as shown in FIG. 4 and FIG. 5, the other side of the housing 100 further includes another recess 170. The another recess 170 of the housing 100 is configured to communicate with the another bearing groove 124 of the housing 100. The another recess 170 of the housing 100 is configured to guide the collected lubricating oil into the another bearing groove 124 of the housing 100. In this way, under effect of gravity, the lubricating oil may flow into the another bearing groove 124 of the housing 100 along the another recess 170 of the housing 100, to implement passive cooling and passive lubrication for the gear and the bearing of the another output shaft 322 of the other parallel shaft reducer that is connected to the generator in a transmission manner. Therefore, the production costs of the range extended powertrain 10 can be further reduced.

In some embodiments, as shown in FIG. 4 and FIG. 5, the another recess 170 of the housing 100 is arranged on one side that is of the end 141 of the oil collecting rib 140 of the housing 100 and that is away from the other end 142 of the oil collecting rib 140. The recess 160 of the housing 100 and the end 141 of the oil collecting rib 140 of the housing 100 are adjacently arranged. In this way, the lubricating oil collected by the oil collecting rib 140 of the housing 100 may flow into the another recess 170 of the housing 100 along a spacing of the end 141 of the oil collecting rib 140 of the housing 100, and then flow into the another bearing groove 124 of the housing 100.

In some embodiments, as shown in FIG. 4 and FIG. 5, the another recess 170 of the housing 100 is arranged on one side that is of the another oil collecting rib of the housing 100 and that faces the another shaft hole 122 of the housing 100. The another recess 170 of the housing 100 and the another oil collecting rib of the housing 100 are adjacently arranged. In this way, the lubricating oil collected by the another oil collecting rib of the housing 100 may flow into the another recess 170 of the housing 100, and then flow into the another bearing groove 124 of the housing 100.

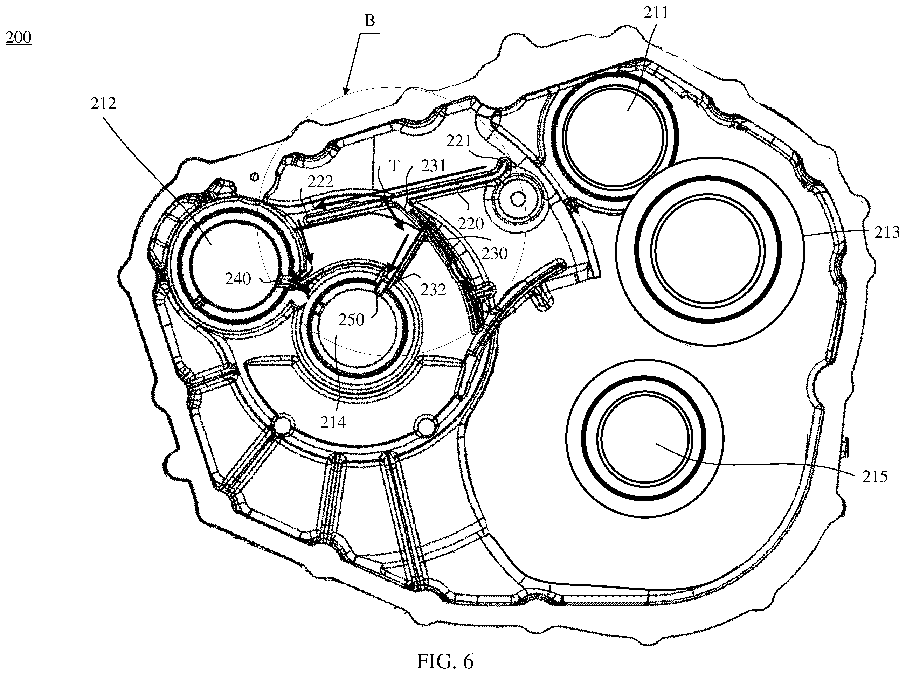

As shown in FIG. 6, one side of the other housing 200 includes one bearing groove 211. The bearing groove 211 of the other housing 200 is configured to communicate with the reducer accommodation cavity, and the bearing groove 211 of the other housing 200 is further configured to fasten the other bearing 3113 of the input shaft 311. In this way, the shaft hole 121 of the housing 100 and the bearing groove 211 of the other housing 200 are used, so that two ends of the input shaft 311 can be supported.

As shown in FIG. 6, one side of the other housing 200 further includes another bearing groove 212. The another bearing groove 212 of the other housing 200 is configured to communicate with the reducer accommodation cavity, and the another bearing groove 212 of the other housing 200 is further configured to fasten the another bearing 3213 of the another input shaft 321. In this way, the another shaft hole 122 of the housing 100 and the another bearing groove 212 of the other housing 200 are used, so that two ends of the another input shaft 321 can be supported.

As shown in FIG. 6, one side of the other housing 200 further includes still another bearing groove 213. The still another bearing groove 213 of the other housing 200 is configured to communicate with the reducer accommodation cavity, and the still another bearing groove 213 of the other housing 200 is further configured to fasten the other bearing 3124 of the intermediate shaft 312. In this way, the bearing groove 123 of the housing 100 and the still another bearing groove 213 of the other housing 200 are used, so that two ends of one intermediate shaft 312 can be supported.

As shown in FIG. 6, one side of the other housing 200 further includes one shaft hole 214. The shaft hole 214 of the other housing 200 is configured to communicate with the reducer accommodation cavity, and the shaft hole 214 of the other housing 200 is further configured to fasten the other bearing 3222 of the another output shaft 322. In this way, the another bearing groove 124 of the housing 100 and the shaft hole 214 of the other housing 200 are used, so that two ends of the another output shaft 322 can be supported.

As shown in FIG. 6, a spacing between the still another bearing groove 213 of the other housing 200 and the another bearing groove 212 of the other housing 200 is greater than a spacing between the bearing groove 211 of the other housing 200 and the another bearing groove 212 of the other housing 200, and a spacing between the shaft hole 214 of the other housing 200 and the bearing groove 211 of the other housing 200 is less than a spacing between the bearing groove 211 of the other housing 200 and the another bearing groove 212 of the other housing 200. In other words, the still another bearing groove 213 of the other housing 200 is arranged on one side that is of the bearing groove 211 of the other housing 200 and that is away from the another bearing groove 212 of the other housing 200. The shaft hole 214 of the other housing 200 is arranged on one side that is of the another bearing groove 212 of the other housing 200 and that is close to the bearing groove 211 of the other housing 200.

In some embodiments, to make a structure of the range extended powertrain compact, an outer groove wall of the still another bearing groove 213 of the other housing 200 may be tangent to a hole wall of the bearing groove 211 of the other housing 200. Similarly, the shaft hole 214 of the other housing 200 may also be tangent to a hole wall of the another bearing groove 212 of the other housing 200.

As shown in FIG. 6, one side of the other housing 200 further includes another shaft hole 215. The another shaft hole 215 of the other housing 200 is configured to communicate with the reducer accommodation cavity, and the another shaft hole 215 of the other housing 200 is further configured to fasten the other bearing 3132 of the output shaft 313. In this way, the still another shaft hole 125 of the housing 100 and the another shaft hole 215 of the other housing 200 are used, so that two ends of the another output shaft 313 can be supported.

In some embodiments, as shown in FIG. 6, one side of the other housing 200 includes another oil guiding rib 220. In the width direction of the oil guiding rib 130, the another oil guiding rib 220 and the oil guiding rib 220 are combined to form an oil guiding groove. In this way, the another oil guiding rib 220 of the other housing 200 can collect the lubricating oil of the oil guiding rib 130 of the housing 100. In this way, the lubricating oil collected by the another oil guiding rib 220 of the other housing 200 can lubricate a component on one side of the other housing 200. Therefore, cooling effect and lubrication effect of a gear and a bearing of each shaft of each reducer of the range extended powertrain 10 are improved, and the production costs of the range extended powertrain 10 are reduced.

As shown in FIG. 6, an extension direction of the another oil guiding rib 220 is from the bearing groove 211 of the other housing 100 to the another bearing groove 212 of the other housing 100. The extension direction of the another oil guiding rib 220 is inclined relative to the horizontal plane to guide the lubricating oil collected by the another oil guiding rib 220 to the another bearing groove 212 of the other housing 100, to implement passive cooling and passive lubrication for the gear and the bearing of the another input shaft 321 of the other parallel shaft reducer that is connected to the generator in a transmission manner. Therefore, the cooling effect and lubrication effect of the gear and the bearing of each shaft of the other parallel shaft reducer that is connected to the generator in a transmission manner can be improved, and the production costs of the range extended powertrain 10 can be further reduced. Further, the performance of the range extended powertrain 10 is improved.

It should be noted that the extension direction of the another oil guiding rib 220 may be understood as a length direction of the another oil guiding rib 220.

In some embodiments, as shown in FIG. 6, in the gravity direction, one end 221 of the another oil guiding rib 220 is higher than the other end 222 of the another oil guiding rib 220. In this way, the another oil guiding rib 220 can guide the collected lubricating oil to the another bearing groove 212 of the other housing 200.

In some embodiments, as shown in FIG. 6, the another oil guiding rib 220 is arranged between the bearing groove 211 of the other housing 100 and the another bearing groove 212 of the other housing 100 at a spacing. In the extension direction of the another oil guiding rib 220, a spacing between the end 221 of the another oil guiding rib 220 and the bearing groove 211 of the other housing 100 is greater than a spacing between the other end 222 of the another oil guiding rib 220 and the another bearing groove 212 of the other housing 100. In this way, the another oil guiding rib 220 can better guide the collected lubricating oil to the another bearing groove 212 of the other housing 100, to further improve passive cooling and passive lubrication for the gear and the bearing of each shaft of the other parallel shaft reducer.

In some embodiments, the extension direction of the another oil guiding rib 220 is the same as the extension direction of the oil guiding rib 130. An acute angle range between an extension direction of the oil guiding groove and the horizontal plane is [15 degrees, 30 degrees]. In this way, efficiency of collecting the lubricating oil by the oil guiding groove and efficiency of guiding the collected lubricating oil by the oil guiding groove to the another shaft hole 122 of the housing 100 can be improved.

In some embodiments, the end 221 of the another oil guiding rib 220 bends toward one side of the oil outlet 151. In this way, the lubricating oil collected by the another oil guiding rib 220 can be prevented from flowing back along the end 221 of the another oil guiding rib 220.

In some embodiments, a length of the another oil guiding rib 220 is equal to the length of the oil guiding rib 130. In this way, efficiency of collecting the lubricating oil by the oil guiding groove formed by combining the two oil guiding ribs and efficiency of guiding the collected lubricating oil by the oil guiding groove to the another shaft hole 122 of the housing 100 can be improved.

In some embodiments, the other side of the other housing 200 further includes one oil collecting rib. The oil collecting rib of the other housing 200 is spaced apart from the another oil guiding rib 220. A spacing between one end of the oil collecting rib of the other housing 200 and the bearing groove 211 of the other housing 200 is greater than a spacing between the other end of the oil collecting rib of the other housing 200 and the another bearing groove 212 of the other housing 200. The spacing between the other end of the oil collecting rib of the other housing 200 and the another bearing groove 212 of the other housing 200 is less than or equal to the spacing between the other end 222 of the another oil guiding rib 220 and the another bearing groove 212 of the other housing 200. The oil collecting rib of the other housing 200 is configured to collect the lubricating oil flowing out from the other end 222 of the another oil guiding rib 220.

In this way, only the oil collecting rib needs to be disposed, at a spacing, near the another oil guiding rib 220 on the other side of the other housing 200, so that the lubricating oil collected by the another oil guiding rib 220 can be guided to the oil collecting rib, to further reduce the production costs of the range extended powertrain 10.

In addition, the other end of the oil collecting rib of the other housing 200 is closer to the another bearing groove 212 of the other housing 200 than the other end 222 of the another oil guiding rib 220. In this way, the oil collecting rib of the other housing 200 can collect the lubricating oil flowing out from the other end 222 of the another oil guiding rib 220, and a large amount of lubricating oil is collected by the oil collecting rib of the other housing 200 from the other end 222 of the another oil guiding rib 220.

In some embodiments, the end of the oil collecting rib of the other housing 200 faces the shaft hole 214 of the other housing 200. A spacing between the end of the oil collecting rib of the other housing 200 and the another oil guiding rib 220 is greater than a spacing between the other end of the oil collecting rib of the other housing 200 and the another oil guiding rib 220. The oil collecting rib of the other housing 200 is further configured to guide the lubricating oil collected by the oil collecting rib to the another bearing groove. In this way, under effect of gravity, the oil collecting rib of the other housing 200 can smoothly guide the lubricating oil collected by the oil collecting rib to the shaft hole 214 of the other housing 200, to implement passive cooling and passive lubrication for the gear and the bearing of the another output shaft 322 of the other parallel shaft reducer that is connected to the generator in a transmission manner.

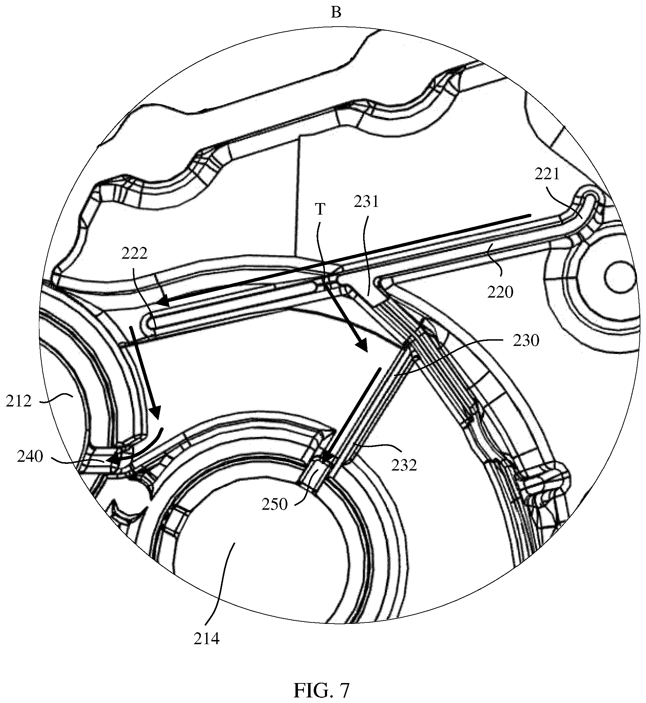

In some embodiments, as shown in FIG. 6 and FIG. 7, the another oil guiding rib 220 includes a through hole T, and the through hole T of the another oil guiding rib 220 is configured to flow out the lubricating oil collected by the another oil guiding rib 220. The through hole T of the another oil guiding rib 220 runs through the another oil guiding rib 220 in a thickness direction of the another oil guiding rib 220. In this way, the another oil guiding rib 220 can guide the lubricating oil collected by the another oil guiding rib 220 to the another bearing groove 212 of the other housing 200, and the another oil guiding rib 220 can further guide a part of the lubricating oil collected by the another oil guiding rib 220 to another component through the through hole T of the another oil guiding rib 220, to improve cooling effect and lubrication effect of the another component.

It should be noted that the thickness direction of the another oil guiding rib 220 may be understood as a height direction of the another oil guiding rib 220.

In some embodiments, as shown in FIG. 6 and FIG. 7, a spacing between the through hole T of the another oil guiding rib 220 and the end 221 of the another oil guiding rib 220 is greater than or equal to a spacing between the through hole T of the another oil guiding rib 220 and the other end 222 of the another oil guiding rib 220. Compared with the bearing groove 211 of the other housing 200, the through hole T of the another oil guiding rib 220 is disposed on one side that is closer to the another bearing groove 212 of the other housing 200. In this way, the another oil guiding rib 220 may guide, through the through hole T of the another oil guiding rib 220, a part of the lubricating oil collected by the another oil guiding rib 220 to the shaft hole 214 located between the bearing groove 211 and another bearing groove 212 of the other housing 200, to implement passive cooling and passive lubrication for the gear and the bearing of the another output shaft 322 of the other parallel shaft reducer that is connected to the generator in a transmission manner. In this way, the cooling effect and the lubrication effect of the gear and the bearing of each shaft of the other parallel shaft reducer that is connected to the generator in a transmission manner can be further improved, and the production costs of the range extended powertrain 10 can be further reduced.

In some embodiments, as shown in FIG. 6 and FIG. 7, the through hole T of the another oil guiding rib 220 communicates with one end surface of the another oil guiding rib 220. The end surface of the another oil guiding rib 220 faces the housing 100. In a width direction of the another oil guiding rib 220, a spacing between the end surface of the another oil guiding rib 220 and the other housing 200 is less than or equal to a spacing between each bearing groove or each shaft hole of the other housing 200 and the other housing 200. In this way, the another oil guiding rib 220 can guide, as fully as possible, the lubricating oil collected by the another oil guiding rib 220 to the another bearing groove 212 or the shaft hole 214 of the other housing 200.

It should be noted that the width direction of the another oil guiding rib 220 may be understood as a width direction of the other housing 200.

In some embodiments, as shown in FIG. 6 and FIG. 7, the other side of the other housing 200 further includes another oil collecting rib 230, and the another oil collecting rib 230 of the other housing 200 and the another oil guiding rib 220 are adjacently arranged. A spacing between one end 231 of the another oil collecting rib 230 of the other housing 200 and the bearing groove 211 of the other housing 200 is less than or equal to a spacing between the through hole T of the another oil guiding rib 220 and the bearing groove 211 of the other housing 200. A spacing between the other end 232 of the another oil collecting rib 230 of the other housing 200 and the another bearing groove 212 of the other housing 200 is less than or equal to a spacing between the through hole T of the another oil guiding rib 220 and the another bearing groove 212 of the other housing 200. The another oil collecting rib 230 of the other housing 200 is configured to collect the lubricating oil flowing out from the through hole T of the another oil guiding rib 220.

In this way, only the another oil collecting rib 230 needs to be disposed near the another oil guiding rib 220 on the other side of the other housing 200, so that the lubricating oil flowing out from the through hole T of the another oil guiding rib 220 can be guided to the another oil collecting rib 230 of the other housing 200, to further reduce the production costs of the range extended powertrain 10.

In addition, the another oil collecting rib 230 of the other housing 200 is located below the through hole T of the another oil guiding rib 220. In this way, the another oil collecting rib 230 of the other housing 200 can collect the lubricating oil flowing out from the through hole T of the another oil guiding rib 220, and a large amount of lubricating oil is collected by the another oil collecting rib 230 of the other housing 200 from the through hole T of the another oil guiding rib 220.

In some embodiments, as shown in FIG. 6 and FIG. 7, the other end 232 of the another oil collecting rib 230 of the other housing 200 faces the shaft hole 214 of the other housing 200. A spacing between the end 231 of the another oil collecting rib 230 of the other housing 200 and the another oil guiding rib 220 is less than a spacing between the other end 232 of the another oil collecting rib of the other housing 200 and the another oil guiding rib 220. The another oil collecting rib 230 of the other housing 200 is further configured to guide the lubricating oil collected by the another oil collecting rib 230 to the shaft hole 214 of the other housing 200. In this way, under effect of gravity, the another oil collecting rib 230 of the other housing 200 can smoothly guide the lubricating oil collected by the another oil collecting rib 230 to the shaft hole 214 of the other housing 200, to implement passive cooling and passive lubrication for the gear and the bearing of the another output shaft 322 of the other parallel shaft reducer that is connected to the generator in a transmission manner.

In some embodiments, as shown in FIG. 6 and FIG. 7, there is no spacing between the end 231 of the another oil collecting rib 230 of the other housing 200 and the another oil guiding rib 220. In this way, the amount of lubricating oil collected by the another oil collecting rib 230 of the other housing 200 from the through hole T of the another oil guiding rib 220 can be increased.

In some embodiments, as shown in FIG. 6 and FIG. 7, a middle part of the another oil collecting rib 230 of the other housing 200 bends toward one side that is away from the another bearing groove 212 of the other housing 200. In this way, impact of the lubricating oil flowing out from the through hole T of the another oil guiding rib 220 on the another oil collecting rib 230 of the other housing 200 can be reduced.

In some embodiments, as shown in FIG. 6 and FIG. 7, the other side of the other housing 200 further includes one recess 240. The recess 240 of the other housing 200 is configured to communicate with the another bearing groove 212 of the other housing 200. The recess 240 of the other housing 200 is configured to guide the collected lubricating oil into the another bearing groove 212 of the other housing 200. In this way, under effect of gravity, the lubricating oil may flow into the another bearing groove 212 of the other housing 200 along the recess 240 of the other housing 200, to implement passive cooling and passive lubrication for the gear and the bearing of the another input shaft 321 of the other parallel shaft reducer that is connected to the generator in a transmission manner. Therefore, the production costs of the range extended powertrain 10 can be further reduced.

In some embodiments, as shown in FIG. 6 and FIG. 7, the recess 240 of the other housing 200 is arranged on one side that is of the other end of the oil collecting rib of the other housing 200 and that is away from the end of the oil collecting rib. The recess 240 of the other housing 200 and the other end of the oil collecting rib of the other housing 200 are adjacently arranged, and there is a spacing between the recess 240 of the other housing 200 and the other end of the oil collecting rib of the other housing 200. In this way, a part of the lubricating oil flowing out from the other end 222 of the another oil guiding rib 220 may flow into the recess 240 of the other housing 200 along the spacing between the recess 240 of the other housing 200 and the other end of the oil collecting rib, and then flow into the another bearing groove 212 of the other housing 200. The other part of the lubricating oil flowing out from the other end 222 of the another oil guiding rib 220 may flow into the oil collecting rib along a spacing between the another oil guiding rib 220 and the oil collecting rib.

In some embodiments, as shown in FIG. 6 and FIG. 7, the recess 240 of the other housing 200 is arranged on one side that is of the shaft hole 214 of the other housing 200 and that faces the another oil guiding rib 220 of the other housing 200, and the recess 240 of the other housing 200 is spaced apart from the other end 222 of the another oil guiding rib 220 of the other housing 200. In this way, the lubricating oil flowing out from the other end 222 of the another oil guiding rib 220 may flow into the recess 240 of the other housing 200, and then flow into the another bearing groove 212 of the other housing 200.

In some embodiments, as shown in FIG. 6 and FIG. 7, the other side of the other housing 200 further includes another recess 250. The another recess 250 of the other housing 200 is configured to communicate with the shaft hole 214 of the other housing 200. The another recess 250 of the other housing 200 is configured to guide the collected lubricating oil into the shaft hole 214 of the other housing 200. In this way, under effect of gravity, the lubricating oil may flow into the shaft hole 214 of the other housing 200 along the another recess 250 of the other housing 200, to implement passive cooling and passive lubrication for the gear and the bearing of the another output shaft 322 of the other parallel shaft reducer that is connected to the generator in a transmission manner. Therefore, the production costs of the range extended powertrain 10 can be further reduced.

In some embodiments, as shown in FIG. 6 and FIG. 7, the another recess 250 of the other housing 200 is arranged on one side that is of the end of the oil collecting rib of the other housing 200 and that is away from the other end of the oil collecting rib. The recess 240 of the other housing 200 and the end of the oil collecting rib of the other housing 200 are adjacently arranged. In this way, the lubricating oil collected by the oil collecting rib of the other housing 200 may flow into the another recess 250 of the other housing 200 along a spacing of the end of the oil collecting rib of the other housing 200, and then flow into the shaft hole 214 of the other housing 200.

In some embodiments, the another recess 250 of the other housing 200 is arranged on one side that is of the another oil collecting rib 230 of the other housing 200 and that faces the another bearing groove 212 of the other housing 200. The another recess 250 of the other housing 200 and the another oil collecting rib 230 of the other housing 200 are adjacently arranged. In this way, the lubricating oil collected by the another oil collecting rib 230 of the other housing 200 may flow into the another recess 250 of the other housing 200, and then flow into the shaft hole 214 of the other housing 200.

It should be noted that an axial direction of the range extended powertrain 10 may also be understood as an axial direction of an electric motor, an axial direction of a generator, or an axial direction of a parallel shaft reducer. An axial direction of the electric motor is an axial direction of a motor shaft of the electric motor. An axial direction of the generator is an axial direction of a motor shaft of the generator. An axial direction of the parallel shaft reducer is an axial direction of each shaft of the parallel shaft reducer.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A range extended powertrain, wherein the range extended powertrain comprises two housings, one side of one of the housings comprises two motor cavities arranged in parallel, the two motor cavities are respectively configured to fasten a stator of one electric motor and a stator of one generator, the other side of the housing and the other housing are enclosed to form a reducer accommodation cavity, the reducer accommodation cavity is configured to accommodate two parallel shaft reducers arranged in parallel, one of the parallel shaft reducers comprises one input shaft, one intermediate shaft, and one output shaft, the other parallel shaft reducer comprises another input shaft and another output shaft, and the other side of the housing comprises:
two shaft holes, wherein one of the shaft holes is configured to separately communicate with the reducer accommodation cavity and one of the motor cavities and is configured to fasten one bearing of the input shaft, and the other shaft hole is configured to communicate with the reducer accommodation cavity and the other motor cavity and is configured to fasten one bearing of the another input shaft;
two bearing grooves, wherein one of the bearing grooves is configured to fasten one bearing of the intermediate shaft, the other bearing groove is configured to fasten one bearing of the another output shaft, a spacing between the bearing groove and the other shaft hole is greater than a spacing between the two shaft holes, and a spacing between the other bearing groove and the shaft hole is less than the spacing between the two shaft holes; and
one oil guiding rib, wherein an extension direction of the oil guiding rib is from the shaft hole to the other shaft hole, and the extension direction of the oil guiding rib is inclined relative to a horizontal plane to guide lubricating oil collected by the oil guiding rib to the other shaft hole.

2. The range extended powertrain according to claim 1, wherein the oil guiding rib is arranged between the shaft hole and the other shaft hole at a spacing, and in the extension direction of the oil guiding rib, a spacing between one end of the oil guiding rib and the shaft hole is greater than a spacing between the other end of the oil guiding rib and the other shaft hole.

3. The range extended powertrain according to claim 1 or 2, wherein the other side of the housing comprises one protrusion, a side surface that is of the protrusion and that faces the other shaft hole comprises one oil outlet, an outlet of the oil outlet faces the other shaft hole, and the oil guiding rib is configured to collect the lubricating oil output from the oil outlet.

4. The range extended powertrain according to claim 3, wherein a length of the protrusion is less than a length of the oil guiding rib, a spacing between the protrusion and the shaft hole is greater than the spacing between the other end of the oil guiding rib and the other shaft hole, and a spacing between the oil outlet and the shaft hole is greater than the spacing between the end of the oil guiding rib and the shaft hole.

5. The range extended powertrain according to any one of claims 1 to 4, wherein the oil guiding rib comprises one through hole, and the through hole is used to flow out the lubricating oil collected by the oil guiding rib;
the through hole runs through the oil guiding rib in a thickness direction of the oil guiding rib; and
a spacing between the through hole and the end of the oil guiding rib is greater than or equal to a spacing between the through hole and the other end of the oil guiding rib.

6. The range extended powertrain according to claim 5, wherein the through hole communicates with one end surface of the oil guiding rib; and
the end surface of the oil guiding rib faces the other housing, and in a width direction of the oil guiding rib, a spacing between the end surface of the oil guiding rib and the other housing is less than or equal to a spacing between each bearing groove or each shaft hole and the other housing.

7. The range extended powertrain according to any one of claims 1 to 6, wherein the other side of the housing further comprises one oil collecting rib, the oil collecting rib is spaced apart from the oil guiding rib, and a spacing between one end of the oil collecting rib and the shaft hole is greater than a spacing between the other end of the oil collecting rib and the other shaft hole; and
the spacing between the other end of the oil collecting rib and the other shaft hole is less than or equal to the spacing between the other end of the oil guiding rib and the other shaft hole, and the oil collecting rib is configured to collect the lubricating oil flowing out from the other end of the oil guiding rib.

8. The range extended powertrain according to claim 7, wherein the end of the oil collecting rib faces the other bearing groove, a spacing between the end of the oil collecting rib and the oil guiding rib is greater than a spacing between the other end of the oil collecting rib and the oil guiding rib, and the oil collecting rib is further configured to guide the lubricating oil collected by the oil collecting rib to the other bearing groove.

9. The range extended powertrain according to any one of claims 1 to 8, wherein the other side of the housing further comprises another oil collecting rib, and the another oil collecting rib and the oil guiding rib are adjacently arranged; and
a spacing between one end of the another oil collecting rib and the shaft hole is less than or equal to a spacing between the through hole of the oil guiding rib and the shaft hole, a spacing between the other end of the another oil collecting rib and the other shaft hole is less than or equal to a spacing between the through hole of the oil guiding rib and the other shaft hole, and the another oil collecting rib is configured to collect the lubricating oil flowing out from the through hole of the oil guiding rib.

10. The range extended powertrain according to claim 9, wherein the other end of the another oil collecting rib faces the other bearing groove, a spacing between the end of the another oil collecting rib and the oil guiding rib is less than a spacing between the other end of the another oil collecting rib and the oil guiding rib, and the another oil collecting rib is further configured to guide the lubricating oil collected by the another oil collecting rib to the other bearing groove.

11. The range extended powertrain according to any one of claims 1 to 10, wherein the other side of the housing further comprises two recesses, and an extension direction of each recess is inclined relative to the horizontal plane;
one recess is configured to communicate with the other shaft hole and is configured to guide the collected lubricating oil into the other shaft hole; and
the other recess is configured to communicate with the other bearing groove and is configured to guide the collected lubricating oil into the other bearing.

12. The range extended powertrain according to any one of claims 1 to 11, wherein one side of the other housing faces the other side of the housing, the side of the other housing comprises another oil guiding rib, and in the width direction of the oil guiding rib, the another oil guiding rib and the oil guiding rib are combined to form an oil guiding groove.

13. The range extended powertrain according to claim 12, wherein an extension direction of the another oil guiding rib is the same as the extension direction of the oil guiding rib, and an acute angle range between an extension direction of the oil guiding groove and the horizontal plane is [15 degrees, 30 degrees].

14. The range extended powertrain according to claim 12 or 13, wherein one end of the another oil guiding rib and the end of the oil guiding rib separately bend toward one side of the oil outlet; and
a length of the another oil guiding rib is equal to the length of the oil guiding rib.

15. A range extended electric vehicle, wherein the range extended electric vehicle comprises wheels, a battery pack, and the range extended powertrain according to any one of claims 1 to 14, and the range extended powertrain is configured to receive power supplied by the battery pack and drive the wheels.
